# EUROPEAN PATENT SPECIFICATION

(11) **EP 4 089 495 B1**
(45) Date of publication and mention of the grant of the patent: **09.08.2023**
(21) Application number: 21173195.5
(22) Date of filing: 11.05.2021
(51) Int. Cl.: G05B 23/02

(54) **ANALYSIS DEVICE AND METHOD FOR MONITORING AN OPERATIONAL STATE OF AN INDUSTRIAL SYSTEM**
ANALYSEVORRICHTUNG UND VERFAHREN ZUR ÜBERWACHUNG EINES BETRIEBSZUSTANDS EINES INDUSTRIELLEN SYSTEMS
DISPOSITIF D'ANALYSE ET PROCÉDÉ DE SURVEILLANCE D'UN ÉTAT DE FONCTIONNEMENT D'UN SYSTÈME INDUSTRIEL

(43) Date of publication of application: 16.11.2022
(73) Proprietor: Omron Europe B.V., 2132 JD Hoofddorp (NL)
(72) Inventor: Foreman, Tim, 5234 GM 's-Hertogenbosch (NL); Yurchenko, Mariya, 5234 GM 's-Hertogenbosch (NL); Fayazbakhsh, Mahdi, 5234 GM 's-Hertogenbosch (NL)
(74) Representative: Horn Kleimann Waitzhofer Patentanwälte PartG mbB

(56) References cited:
- WO-A1-2017/201345
- US-A1- 2017 092 021
- US-A1- 2020 351 283

## Description

The present invention relates to an analysis device for monitoring an operational state of an industrial system. The present invention further relates to a corresponding method for monitoring an operational state of an industrial system and to a corresponding computer program product.

Industrial systems such as manufacturing systems usually include multiple interacting industrial devices. To ensure a correct operation of the industrial devices and hence of the entire industrial system, an automatic anomaly detection can be desirable.

In the document US 2019/0391574 A1, such an anomaly detection is performed based on sensor data and on user-labelled abnormal time periods including an anomaly event. This solution is based on a labelling by a user.

Further, document EP 3 579 072 A1 discloses a method for automatically generating labelled signatures for data portions.

It is one object of the present invention to improve the monitoring of an operational state of an industrial system.

According to a first aspect, an analysis device for monitoring an operational state of an industrial system performing an industrial task is provided according to independent claim 1.

A label including both the priority and the event category of the sensor data can be autonomously created for the sensor data. The label hence forms a useful description of the sensor data, which can be used for analysis, storage and/or diagnosis purposes. Labelled data is useful and/or necessary in multiple data analysis techniques, including root cause analysis, predictive maintenance, and the like. Such analysis techniques may be facilitated and/or enabled by the provision of the label. The autonomously assigned labels are for example used to train data models for anomaly detection and condition monitoring. Analyzing the labeled data and/or the labels also allows planning an availability of the industrial devices. Providing a label in an autonomous and automatic manner is advantageous because labels can be assigned in a more convenient, faster, and more reliable manner than when they are assigned manually by a user. It may further be possible to reduce storage and do faster data analysis because once the sensor data is labeled, in particular only features that characterize the event category are stored.

The industrial system can be a system performing an industrial task (process) such as a manufacturing task, an assembly task, a control task, a conveying task or the like. The industrial system may include multiple industrial devices such as robots, machines, conveyor belts, control device or the like. The control device may be a personal computer (PC) or an industrial PC (IPC) for controlling at least some of the remaining industrial devices.

The industrial devices interacting with each other in particular means that the industrial devices jointly perform the industrial task of the industrial system (i.e. they perform the industrial task together). For example, the industrial devices may each perform individual tasks, which correspond to the industrial task when joined. For example, the industrial devices can be coordinated and/or synchronized to ensure a proper hand-over of individual industrial tasks from one industrial device to another.

The analysis device can be part of the industrial system or it may be provided as a separate entity. One analysis device can be used to monitor operational states of multiple industrial systems. The analysis device may be a PC or an IPC. The analysis device may interact communicatively with at least some of the industrial devices such as to exchange data therewith. In particular, the analysis device can communicate with the control device. The analysis device may also be part of the control device. The analysis device may include a human-machine-interface and/or allow a communication with a user. For example, the analysis device may display information on a screen thereof and/or receive input from a user, for example via interactions with a touchscreen of the analysis device.

The reception unit, the prioritization unit and the labelling unit are part of the analysis device. They can be provided as hardware and/or software units. The reception unit, the prioritization unit and/or the labelling unit can be communicatively coupled to each other, for example via an internal bus or communication path.

The industrial system in particular includes one or several sensors provided on or along the industrial devices for sensing physical properties of the industrial devices. The sensors may be included in the industrial devices. The sensors can include a camera, a temperature sensor, a pressure sensor, a movement sensor, a light curtain or the like. The physical properties sensed by the sensors can form the sensor data and can be transferred from the sensors to the analysis device, where they are received by the reception unit. The transfer may be performed via a wireless communication protocol and/or via a cable. Accordingly, the reception unit is adapted to receive the sensor data wirelessly and/or via a cable.

The physical properties sensed by the sensors can describe events defining the operational state of the industrial devices. The operational state of the industrial device in particular includes information about whether the industrial device is ON or OFF, about a position of components of the industrial device and/or about whether it operates as expected (at expected temperatures, speed or the like).

The event characterizing the operation state can be indicative of a change in the operational state. The event may for example be: the industrial device has been turned ON/OFF, safety light curtains were triggered, a door was opened, a monitored signal was changed, an operator stopped the industrial device, a scheduled stoppage was performed or the like. One event can be jointly represented by multiple sensor data, i.e. by multiple signals. For example, one event is represented by all sensor data sensed during a time period including the event.

The analysis device, in particular the prioritization unit, may include a storage portion for storing prestored industrial device priority information. This prestored industrial device priority information can be accessed by the prioritization unit. The prestored industrial device priority information in particular indicates, for each of the industrial devices that can be described by the sensor data, a corresponding priority information. In other words, each industrial device may have an inherent prestored industrial device priority information associated thereto, which is stored in the storage portion for access by the prioritization unit. The prestored industrial device priority information is for example stored as a table linking each industrial device describable by sensor data to a corresponding priority information.

Upon receiving the sensor data, the prioritization unit may determine which industrial device the received sensor data describes. To this end, the prioritization unit may look into the metadata of the sensor data to determine from which sensor the sensor data was received. From the sensor, the prioritization unit can derive the described industrial device since a sensor may always monitor the same industrial device(s). Then, the prioritization unit may retrieve, from the prestored industrial device priority information, the priority information corresponding to the industrial device described by the received sensor data. This priority information is set as the priority of the sensor data.

The labelling unit autonomously classifies the event represented by the sensor data into one of multiple predefined event categories using a classification algorithm. This function may be performed by a classification unit of the labelling unit. Event categories may define a class into which the event belongs and/or they may define the nature of the event. Examples for event categories include the categories "safety", "machine state", "monitored signals" and "other". Examples for the classification algorithm are detailed further below. The classification algorithm for example uses a prestored table listing all possible known events and the corresponding category to which they belong. In some embodiments, the labelling unit has access to multiple classification algorithms, the best of which is selected for each received sensor data. For example, the classification algorithm is selected depending on the priority of the sensor data. The classification algorithm can also be selected depending on the type of sensor data and a variety of the sensor data characterizing one event. For a same event, different classification algorithms can be used for each sensor data characterizing this event.

The sensor data types may be Float or Boolean, video data, image data, sound data or the like. The sensor data may be time-series, image, video, sound, and other. Next to the sensor data, textual logs of activities and/or shift schedule information may be used.

The classification algorithm may also allow generating new event categories. When new event categories are generated, the previous classification algorithm can be updated based thereon and hence improved.

The priority determination by the prioritization unit and the event classification by the labelling unit may be performed one after another in any order or simultaneously. Preferably, the labelling is performed as rapidly as possible after receiving the sensor data.

The labelling unit further autonomously creates a label for the sensor data. This function may be performed by a label creation unit of the labelling unit. The label may be an information that is associated with the sensor data and describes the sensor data, for example in terms of its content and/or origin. The label in particular includes two parts: the first one is the priority of the sensor data as determined by the prioritization unit and the second one is the event category into which the sensor data was classified by the sensor data. Preferably, the label is stored together with the corresponding sensor data or with a pointer or link to the corresponding sensor data. A complete label can be autonomously assigned to the sensor data.

According to an embodiment,
each event category of the multiple predefined event categories has a prestored event priority information associated thereto; and
the prioritization unit is configured to determine the priority of the sensor data further based on the prestored event priority information associated with the event category into which the labelling unit has classified the event represented by the sensor data.

The priority of the sensor data is in particular not only determined based on the prestored industrial device priority information, it is further determined based on the prestored event priority information associated to the event category. This allows increasing the accuracy with which the sensor data priority is determined.

The prestored event priority information can be stored in the storage portion or in another storage device of the analysis device. This prestored event priority information can be accessed by the prioritization unit. The prestored event priority information in particular indicates, for each of the event categories, a corresponding priority information. The prestored event priority information is for example stored as a table linking each event category to a corresponding priority information.

The prioritization unit may determine the priority of the sensor data using a prioritization algorithm, which allows combining the industrial device priority information and the event priority information to determine the priority of the sensor data. The prioritization algorithm is for example a table, which indicates the priority of the sensor data for any known combination of the industrial device priority information and the event priority information.

The event classification by the labelling unit and the priority determination by the prioritization unit may be performed one after another in this order or simultaneously.

According to the present invention, the prioritization unit is configured to determine the priority of the sensor data further based on:
a prestored frequency of occurrence of the event represented by the sensor data;
a prestored frequency of occurrence of the event category into which the labelling unit has classified the event represented by the sensor data; and/or
a prestored loss function indicating an impact of previous events of the same event category as the event represented by the sensor data on the industrial system and/or on at least one of the industrial devices.

The prestored frequency of occurrence of the event or event category can be an information that is constantly updated as particular events or event categories are detected. In particular, the higher the frequency of occurrence of the event or event category, the higher the priority. As another example, safety events may always have the highest priority, even at low frequency. As a further example, priorities of events of a same category are ordered by frequency of occurrence of the event or event category (pareto principle).

Considering the loss function when determining the priority of the sensor data allows determining the similarity to past events and an estimated damage based thereon.

Taking into account the frequency of occurrence of the event or event category and/or the loss function allows determining the priority of the event with a greater accuracy and reliability.

According to a further embodiment, the analysis device further includes a warning unit configured to send a warning information if the determined event category into which the labelling unit has classified the event represented by the sensor data belongs to a predefined safety-relevant event category and/or if the determined priority is a predefined high priority.

The warning information may be a visual alarm or a sound alarm, a warning message displayed to a user, a stored warning indicator or the like. Emitting such a warning information in particular allows informing the user or highlighting the importance of the event and/or of the sensor data, thereby ensuring that the event does not remain unnoticed. The safety and/or correct operation of the industrial system is thereby improved.

According to a further embodiment, the labelling unit is configured to autonomously create a label for the sensor data only if the labelling unit classifies the event represented by the sensor data into one of predefined relevant event categories.

In particular, after determining the event category of the sensor data event, the labelling unit determines whether this event category is a predefined relevant event category for which the label should be created. Only if the labelling unit determines that the event category is a predefined relevant event category for which the label should be created, the labelling unit creates the label. In particular, a list of the predefined relevant event categories is pre-stored in a table. The predefined relevant event categories in particular include event categories relating to safety aspects of the industrial system.

For example, only events relating to an "ON" state of the industrial system and/or industrial devices get a label. Labelling is only performed for some event categories. The processing effort for labelling can thereby be reduced.

In another example, events which "only" relate to a standard monitoring of the industrial system and do not show any anomalies do not get any labels. Thereby, labelling is only performed for important/relevant event categories. The processing effort for labelling can thereby be reduced.

According to a further embodiment, the classification algorithm includes logistic regression, k-nearest neighbors, decision trees, support vector machine, Naive Bayes, neural networks, and/or deep neural networks.

In particular, the classification algorithm is a trained algorithm receiving, as an input, the sensor data, and outputting the event category and/or features derived from the input data.

The classification algorithms may be trained using history data or simulated data for each sensor data in events and stored in a bank of classification algorithms (models). The training data used to train the classification algorithm is similar to the input and output data of the trained classification algorithm.

Training of the trained classification algorithm is for example performed as supervised learning in which each training data example is a pair consisting of an input sensor data and a desired output event category. The supervised learning algorithm analyzes the training data and produces an inferred function, which can be used for mapping new examples.

The training data may define variables characterizing each industrial device of the industrial system. For example, variables characterizing safety sensors may be Booleans indicating whether safe or unsafe operation is observed. Variables characterizing actuators may be Floats indicating for example, whether a signal is coming through or the like. Variables characterizing a controller or a production process may be categorical and indicate that a door is open, a machine has stopped, a maintenance is planned or the like.

For example, the initial classification algorithm used as an underlying structure for training the classification algorithm may only allow classifying the event into one of few initial event categories. These initial event categories may include: (i) when the industrial system is OFF and no work is scheduled: no label is assigned; (ii) when the industrial system is ON: an initial label "normal" is assigned; and (iii) when the industrial system or any industrial device is stopped during its scheduled working shift: assign a label "machine stopped". Each of these initial labels can be updated with extra details by the classification algorithm and trained on labeled examples in combination with hard-coded rules. Training on labeled data (generated by a user or by another algorithm) is done by classical machine-learning techniques.

According to a further embodiment, the analysis device further includes:
a storage determination unit configured to determine which parts of the sensor data are to be stored based on the determined event category and/or based on the determined priority;
a storage unit configured to store the label of the sensor data together with the parts of the sensor data determined by the storage determination unit.

Depending on the event category and/or the priority of the sensor data (in particular depending on the assigned label), the storage determination unit may determine that none, all or some of the sensor data should be stored. The storage determination unit allows selecting features and raw signals (with appropriate sampling rate) that should be stored for further analysis.

In particular, when the event category relates to safety and/or when the determined priority is high, the storage determination unit decides to store more parts of the sensor data than when the event category does not relate to safety and/or when the determined priority is low. A quantity of stored data can be determined as a function of the relevance of the sensor data.

A quantity of stored data can thereby be optimized in view of the relevance of the sensor data. Only important and/or relevant sensor data is stored, allowing to reduce a quantity of stored data and an amount of required storage space. Reducing the required storage space reduces storage costs, improves storage accessibility, and reduces the required support team.

As an alternative to storing the label together with the sensor data, the label can be stored together with a pointer or link to the corresponding sensor data, and the sensor data can be stored in another storage. In this case, the reduction of the storage space can be achieved in a same manner as when the label and the sensor data are stored together, namely using the storage determination unit.

According to a further embodiment,
the storage unit is configured to prioritize storing labels and sensor data relating to sensor data with a higher priority over storing labels and sensor data relating to sensor data with a lower priority; and/or
the warning unit is configured to prioritize sending a warning information for sensor data with a higher priority over sending a warning information for sensor data relating to sensor data with a lower priority.

In this context, "prioritizing" in particular means that the storage unit stores labels and sensor data relating to sensor data with a higher priority before storing labels and sensor data relating to sensor data with a lower priority (which is lower than the higher priority). The priority of the sensor data can hence define a storage order. The analysis device can thus handle data storage orchestration.

Further, the warning unit is in particular configured to send a warning information for sensor data with a higher priority before sending a warning information for sensor data relating to sensor data with a lower priority (which is lower than the higher priority). In other words, the priority of the sensor data can define an order in which warnings are emitted.

According to a further embodiment, the storage determination unit is configured to use text recognition techniques to retrieve keyword from the sensor data and to include these in the label and/or in the parts of the sensor data to be stored.

The keywords can describe the sensor data. Storing the keywords is advantageous in that they can be used to easily comprehend the content of the sensor data. Analysis of the sensor data may be facilitated using the keywords.

According to a further embodiment, the analysis device further includes:
an anomaly detection unit configured to detect an anomaly in the operational state of the industrial system and/or of the industrial devices based on the label and/or parts of the sensor data stored in the storage unit using an anomaly algorithm.

The anomaly detection unit may use a machine learning algorithm to detect the anomaly. Detecting an anomaly can trigger emitting warning information by the warning unit. The anomaly can also be recognized as an event and handled as such.

Besides anomaly detection for events and/or sensor data, the anomaly detection unit may also apply machine learning models on aggregated information on events and/or sensor data for a period of time to classify the period of time as normal or abnormal period.

According to a further embodiment, the anomaly algorithm includes a pre-trained machine learning algorithm, in particular one of the following algorithms: local outlier factor, isolation forest, and/or vector machine. Other anomaly detection techniques may also be used.

Training of the trained anomaly algorithm may be performed by supervised learning in which each training data example is a pair consisting of an input sensor data and a desired output event category (normal or abnormal). The supervised learning algorithm analyzes the training data and produces an inferred function, which can be used for mapping new examples. The training data can be history or simulated data, wherein models can be run on real-time data. The supervised learning may be performed along the lines explained above in view of the classification algorithm.

Alternatively, training of the trained anomaly algorithm may be performed by unsupervised learning. In unsupervised learning, an allowable bandwidth is defined for each input parameter. When the data varies by an amount that is greater that the allowed bandwidth, an anomaly is detected. Example for such input parameters allowing to determine whether a motor functions normally include an average torque, a torque standard deviation, a minimal torque, a maximum torque or the like.

The anomaly algorithm may also be a third-party anomaly detection model (a pre-trained model), which can be used for detecting abnormal situations.

According to a further embodiment, the analysis device further includes:
a statistical unit configured to supply general statistics of the data stored in the storage unit, in particular including a frequency at which data is stored in the storage unit, a quantity of used and/or available storage space in the storage unit, a duration of non-use of data stored in the storage unit.

The statistical unit provided general statistics relating to the storage unit. This data can be used to monitor the storage unit, make sure that there is sufficient storage space and/or adjust decisions regarding the storage taken by the storage determination unit.

According to a further embodiment, the analysis device further includes:
a maintenance prediction unit configured to recommend a time for performing maintenance of the industrial system and/or of industrial devices based on the labels and/or parts of the sensor data stored in the storage unit. For example, when the labels and/or the stored sensor data parts show multiple anomalies relating to a same industrial device or occurring at a predetermined frequency, the maintenance prediction unit may recommend a maintenance. The recommendation by the maintenance prediction unit may be emitted as a message to a user.

According to a second aspect, a method for monitoring an operational state of an industrial system performing an industrial task, in particular using the analysis device according to the first aspect, is provided according to independent claim 13.

The embodiments and features described with reference to the analysis device of the first aspect or of any embodiment thereof apply mutatis mutandis to the method of the second aspect. In particular, the analysis device of the first aspect is configured to perform the method of the second aspect.

According to a third aspect, a computer program product comprising a program code for executing the method according to the second aspect when run on at least one computer is provided according to independent claim 14.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the method of the second aspect apply mutatis mutandis to the computer program product of the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an example for an industrial system;
- Fig. 2: shows an analysis device for monitoring the operational state of the industrial system of Fig. 1 according to a first embodiment;
- Fig. 3: shows a method for monitoring an operational state of the industrial system of Fig. 1 according to an embodiment;
- Fig. 4: shows an example of sensor data, priorities, event classification and label;
- Fig. 5: shows an analysis device for monitoring the operational state of the industrial system of Fig. 1 according to a second embodiment; and
- Fig. 6: shows an example of a classification algorithm.

In the Figures, like reference numerals designate like or functionally equivalent elements, unless otherwise indicated.

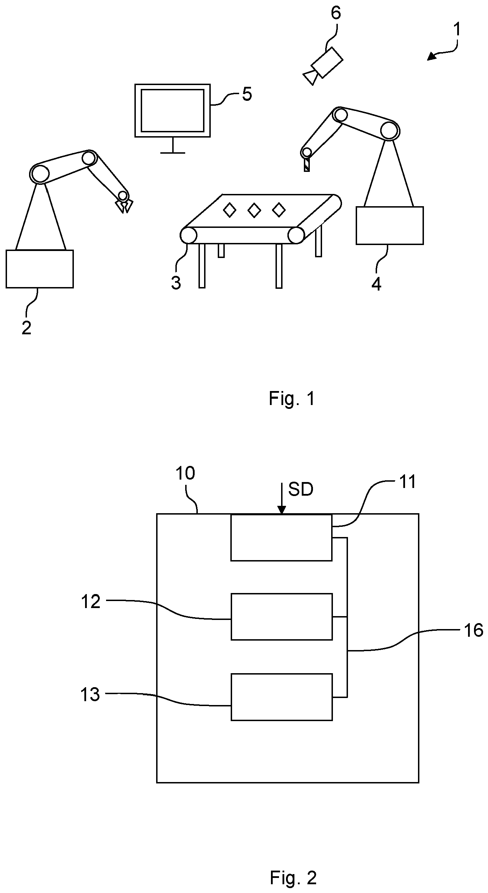

Fig. 1 shows an example for an industrial system 1. The industrial system 1 is a manufacturing system which performs a manufacturing process as an industrial task. The industrial system 1 includes multiple industrial devices 2 - 5 and a sensor device (sensor) 6.

The industrial devices 2-5 include a displacement robot 2, a conveyor belt 3, a drilling robot 4 and a control device 5. The robot 2 is for displacing an object that is being manufactured and placing it on a conveyor belt 3. The conveyor belt 3 allows to displace the object. The drilling robot 4 is for drilling a hole into the object that is being displaced by the conveyor belt 3. The control device 5 is an industrial PC for controlling and coordinating the operation of the industrial devices 2 - 4. The sensor 6 is a camera filming the operation of the industrial devices 2 - 4.

As described above, the industrial devices 2-5 interact such as to jointly perform the industrial task of manufacturing the object.

Fig. 2 shows an analysis device 10 for monitoring the operational state of the industrial system 1 of Fig. 1. The analysis device 10 is provided remotely from the industrial system 1. The analysis device 10 and the industrial system 1 can exchange data wirelessly. The analysis device 10 of Fig. 2 includes a reception unit 11, a prioritization unit 12 and a labelling unit 13. The reception unit 11, prioritization unit 12 and labelling unit 13 can exchange data via an internal communication path 16.

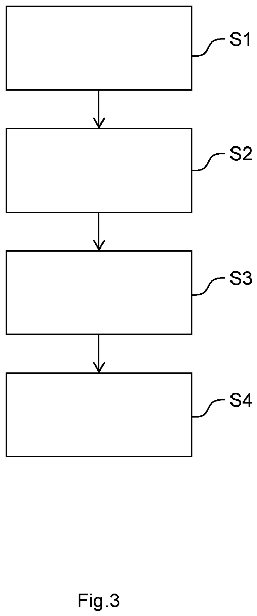

The analysis device 10 of Fig. 2 is configured to monitor the operational state of the industrial system 1 by performing a method for monitoring an operational state of an industrial system 1. An embodiment of such a method is shown in Fig. 3. In the following, the functionality of the analysis device 10 and of its units 11 - 13 is described in view of Fig. 2 and 3 jointly.

In a step S1 of Fig. 3, the analysis device 10 receives sensor data SD. In detail, the sensor data SD is received by the reception unit 11 of the analysis device 10 wirelessly from the industrial system 1. The sensor data SD is data describing the operational state of the industrial devices 2-5.

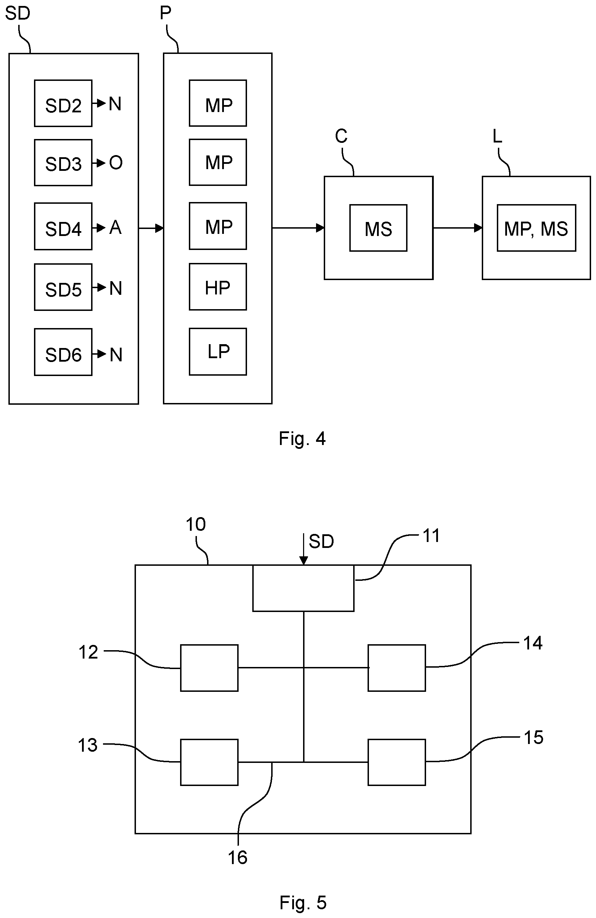

As shown in the left part of Fig. 4, the sensor data SD includes sensor data parts SD2 - SD6, with the number in the reference sign of the sensor data parts SD2 - SD6 referring to the device 2-6 that these sensor data parts SD2 - SD6 respectively describe.

In the example of Fig. 4, the sensor data parts SD2 - SD6 indicate either that the corresponding device 2-6 operates normally (indicated by "N" in Fig. 4), that the corresponding device 2-6 operates abnormally (indicated by "A" in Fig. 4) or that no signal is received from the corresponding device 2-6 (indicated by "0" in Fig. 4). Thus, in the example of Fig. 4, sensor data parts SD2, SD5 and SD6 indicate that devices 2, 5 and 6 operate normally (N), sensor data part SD4 indicates that device 4 operates abnormally (A) and sensor data part SD3 indicates that no sensor data SD is received from device 3 (0).

The sensor data SD shown in the left side of Fig. 4 represents an event. The event is here the loss of connectivity with the conveyor belt 3. The event is characterized by the sensor data parts SD2 - SD6.

In a step S2 of Fig. 3, the prioritization unit 12 of the analysis device 10 determines a priority of the sensor data SD received in step S1. To this end, the prioritization unit 12 makes use of a table forming prestored industrial device priority information. The table indicates the priority of sensor data SD2 - SD6 depending on the industrial device 2-5 characterized by this sensor data SD2 - SD6. For example, the table indicates that sensor data SD2 - SD4 from devices 2 - 4 have medium priority (MP), sensor data SD5 from device 5 has a high priority (HP) and sensor data SD6 from device 6 and characterizing devices 2-5 has a low priority (LP). This is shown in the priority column P of Fig. 4.

Since the event relates to the loss of connectivity with the conveyor belt 3, the priority of events relating to the conveyor belt 3 is used as the overall priority of the event. In other words, the priority of the industrial device 2-5 that is responsible for the event takes over. Hence, the prioritization unit 12 determines that the sensor data SD (and the event corresponding event) of Fig. 4 has a medium priority MP.

In a step S3 of Fig. 3, the labelling unit 13 autonomously classifies the event represented by SD2 - SD6 into one of predefined event categories C using a classification algorithm. Here, the classification algorithm is a trained neural network algorithm. The event categories C into which the labelling unit 13 classifies the event are: "safety event SE", "machine state MS", "monitored signals MO" and "other OT". Here, since the event relates to the state of the conveyor belt, the labelling unit 13 classifies the event as a "machine state MS" event. This is shown in the column "C" of Fig. 4, which shows the event category C as being a machine state MS event.

In a step S4 of Fig. 3, the labelling unit 13 autonomously creates a label L for the event. The label L includes the priority of the sensor data SD determined at step S2 and the event category determined at step S3. As shown in the right part of Fig. 4, the label L is here "medium priority; machine state", abbreviated as "MP, MS".

The analysis device 10 hence allows autonomously creating a label for the event characterized by the sensor data SD. Optionally, a warning unit (not shown) of the analysis device 10 emits a warning by displaying a message on a screen of the analysis device 10 for a user to take notice of the event and if necessary, take appropriate measures.

Fig. 5 shows an analysis device 10 for monitoring the operational state of the industrial system 1 according to a second embodiment. The analysis device 10 of Fig. 5 is identical with the analysis device 10 of Fig. 2, except that it further includes a storage determination unit 14 and a storage unit 15. The analysis device 10 of Fig. 5 may also perform the method of Fig. 3.

The storage determination unit 14 allows determining, depending on the label L of the event, which sensor data parts SD2 - SD6 or which portions (parts) thereof should be stored. To this end, a storage information about the type of data, sensor data parts SD2 - SD6 and/or portions thereof which should be stored, is preconfigured and stored. For example, the storage information may indicate that for safety situations, all available data sets and/or all available data sets relating to the safety situation should be stored on the most detailed level. The storage information may further indicate that for normal situations, only some specific data parts will be stored for statistic purposes. The storage information may further indicate that for the "schedule maintenance" situations, only the maintenance log and signals from the replaced/to be replaced unit are stored in detailed level.

Going back to the example of Fig. 4, the sensor data parts SD3 and SD4 are not normal N and the sensor data part SD5 describes the control device 5 controlling all industrial devices 2-5. Therefore, the storage determination unit 14 determinates that the sensor data parts SD3, SD4 and SD5 should be stored in the storage unit 15. Accordingly, sensor data parts SD3, SD4 and SD5 are stored in the storage unit 15 together with the label L "MP, MS" while the remaining sensor data parts SD2 and SD6 are discarded. Accordingly, a required storage size can be reduced while still storing all important information.

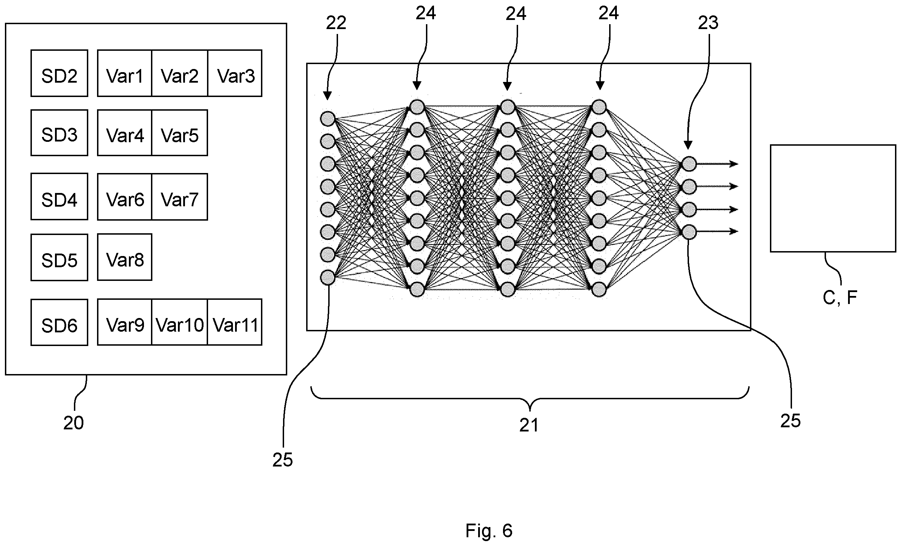

Fig. 6 shows an example of how the neural network classification algorithm is used by the labelling unit 13 in step S3 of Fig. 3.

As shown in Fig. 6, sensor data parts SD2 - SD6 include variables "var" forming a vector. This vector is input into a neural network 21 forming the classification algorithm as input data 20. The neural network 21 includes an input layer 22, an output layer 23 and three hidden layers 24 therebetween, each layer comprising different numbers of neurons 25. The output of the neural network 21 (on the right side in Fig. 6) includes the determined event category and further features F derived from the input data 20 by the neural network 21.

Although the present invention has been described in accordance with preferred embodiments, it is obvious for the person skilled in the art that modifications are possible in all embodiments. For example, an event may be described by sensor data SD including only one sensor data part SD2 - SD6, in particular describing only one industrial device 2-5. Other event types can include an anomaly detection by a safety sensor, an intrusion by a human, a leakage or the like. Other devices 2-6 can be included in the industrial system 1, such as safety sensors, for example. The storage unit 15 may be provided as a separate database instead of within the analysis device 10.

In some embodiments, the prioritization unit 12 receives an information about the event category determined by the labelling unit 13 from the labelling unit. The prioritization unit 12 may include the event category C, a frequency of occurrence of the event or event category C or a prestored loss function into the priority P computation.

In other embodiments, the labelling unit 13 only generates the label L when the event category C is a predefined relevant event category C, for example only when the event category is machine state MS or safety event SE.

### REFERENCE NUMERALS

- 1: industrial system
- 2 - 5: industrial device
- 6: sensor device
- 10: analysis device
- 11: reception unit
- 12: prioritization unit
- 13: labelling unit
- 14: storage determination unit
- 15: storage unit
- 16: internal communication path
- 20: input data
- 21: neural network
- 22: input layer
- 23: output layer
- 24: hidden layer
- 25: neuron
- C: event category
- F: feature
- HP: high priority
- L: label
- LP: low priority
- MO: monitored signal
- MP: medium priority
- MS: machine state
- OT: other
- P: priority
- SD: sensor data
- SD2 - SD6: sensor data part
- SE: safety event

## Claims

1. An analysis device (10) for monitoring an operational state of an industrial system (1) performing an industrial task, the industrial system (1) including multiple industrial devices (2 - 5) interacting to perform the industrial task, the analysis device (10) including:
a reception unit (11) configured to receive sensor data (SD), the sensor data (SD) representing an event characterizing an operational state of one or several of the industrial devices (2 - 5);
a prioritization unit (12) configured to determine a priority (P) of the sensor data (SD) based on a prestored industrial device priority information associated to the one or several industrial devices (2 - 5) **characterized by** the sensor data (SD); and
a labelling unit (13) configured to autonomously classify the event represented by the sensor data (SD) into one of multiple predefined event categories (C) using a classification algorithm and to autonomously create a label (L) for the sensor data (SD), the label (L) including the priority (P) of the sensor data (SD) determined by the prioritization unit (12) and the event category (C) into which the labelling unit (13) has classified the sensor data (SD);
wherein the prioritization unit (12) is configured to determine the priority (P) of the sensor data (SD) further based on:
a prestored frequency of occurrence of the event represented by the sensor data (SD),
a prestored frequency of occurrence of the event category (C) into which the labelling unit (13) has classified the event represented by the sensor data (SD), and/or
a prestored loss function indicating an impact of previous events of the same event category (C) as the event represented by the sensor data (SD) on the industrial system (1) and/or on at least one of the industrial devices (2 - 5); and
wherein the analysis device (10) includes an anomaly detection unit configured to detect an anomaly in the operational state of the industrial system (1) and/or of the industrial devices (2 - 5) based on the label (L) using an anomaly algorithm.

2. The analysis device according to claim 1, wherein
each event category (C) of the multiple predefined event categories (C) has a prestored event priority information associated thereto; and
the prioritization unit (12) is configured to determine the priority (P) of the sensor data (SD) further based on the prestored event priority information associated with the event category (C) into which the labelling unit (13) has classified the event represented by the sensor data (SD).

3. The analysis device according to claim 1 or 2, further including a warning unit configured to send a warning information if the determined event category (C) into which the labelling unit (13) has classified the event represented by the sensor data (SD) belongs to a predefined safety-relevant event category (C) and/or if the determined priority (P) is a predefined high priority.

4. The analysis device according to any one of claims 1-3, wherein the labelling unit (13) is configured to autonomously create a label (L) for the sensor data (SD) only if the labelling unit (13) classifies the event represented by the sensor data (SD) into one of predefined relevant event categories (C).

5. The analysis device according to any one of claims 1-4, wherein the classification algorithm includes logistic regression, k-nearest neighbors, decision trees, support vector machine, Naive Bayes, neural networks, and/or deep neural networks.

6. The analysis device according to any one of claims 1-5, further including:
a storage determination unit (14) configured to determine which parts of the sensor data (SD) are to be stored based on the determined event category (C) and/or based on the determined priority (P);
a storage unit (15) configured to store the label (L) of the sensor data (SD) together with the parts of the sensor data (SD) determined by the storage determination unit (14).

7. The analysis device according to claim 3 and 6, wherein
the storage unit (15) is configured to prioritize storing labels (L) and sensor data (SD) relating to sensor data (SD) with a higher priority over storing labels (L) and sensor data (SD) relating to sensor data (SD) with a lower priority; and/or
the warning unit is configured to prioritize sending a warning information for sensor data (SD) with a higher priority over sending a warning information for sensor data (SD) relating to sensor data (SD) with a lower priority.

8. The analysis device according to claim 6 or 7, wherein the storage determination unit (14) is configured to use text recognition techniques to retrieve keyword from the sensor data (SD) and to include these in the label and/or in the parts of the sensor data (SD) to be stored.

9. The analysis device according to any one of claims 6-8, wherein the anomaly detection unit is further configured to detect an anomaly in the operational state of the industrial system (1) and/or of the industrial devices (2 - 5) based on the label (L) and parts of the sensor data (SD) stored in the storage unit (15) using an anomaly algorithm.

10. The analysis device according to claim 1 or 9, wherein the anomaly algorithm includes a pre-trained machine learning algorithm, in particular one of the following algorithms: local outlier factor, isolation forest, and/or vector machine.

11. The analysis device according to any one of claims 6 - 10, further including:
a statistical unit configured to supply general statistics of the data stored in the storage unit (15), in particular including a frequency at which data is stored in the storage unit (15), a quantity of used and/or available storage space in the storage unit (15), a duration of non-use of data stored in the storage unit (15).

12. The analysis device according to any one of claims 6 - 11, further including:
a maintenance prediction unit configured to recommend a time for performing maintenance of the industrial system (1) and/or of industrial devices (2 - 5) based on the labels (L) and/or parts of the sensor data (SD) stored in the storage unit (15).

13. A method for monitoring an operational state of an industrial system (1) performing an industrial task, in particular using the analysis device (10) according to any one of claims 1 to 12, the industrial system (1) including multiple industrial devices (2 - 5) interacting to perform the industrial task, the method including:
receiving (S1) sensor data (SD), the sensor data (SD) representing an event characterizing an operational state of one or several of the industrial devices (2 - 5);
determining (S2) a priority (P) of the sensor data (SD) based on a prestored industrial device priority information associated to the one or several industrial devices (2 - 5) **characterized by** the sensor data (SD);
autonomously classifying (S3) the event represented by the sensor data (SD) into one of multiple predefined event categories (C) using a classification algorithm; and
autonomously creating (S4) a label (L) for the sensor data (SD), the label (L) including the priority (P) of the sensor data (SD) determined by the prioritization unit (12) and the event category (C) into which the sensor data (SD) was classified;
wherein the step of determining (S2) the priority (P) of the sensor data (SD) further bases the priority (P) determination on:
a prestored frequency of occurrence of the event represented by the sensor data (SD),
a prestored frequency of occurrence of the event category (C) into which the labelling unit (13) has classified the event represented by the sensor data (SD), and/or
a prestored loss function indicating an impact of previous events of the same event category (C) as the event represented by the sensor data (SD) on the industrial system (1) and/or on at least one of the industrial devices (2 - 5);
wherein the method further includes detecting an anomaly in the operational state of the industrial system (1) and/or of the industrial devices (2 - 5) based on the label (L) using an anomaly algorithm.

14. A computer program product comprising a program code for executing the method according to claim 13 when run on at least one computer.

## Patentansprüche

1. Analysevorrichtung (10) zum Überwachen eines Betriebszustands eines industriellen Systems (1), das eine industrielle Aufgabe ausführt, wobei das industrielle System (1) mehrere industrielle Vorrichtungen (2 - 5) enthält, die zusammenwirken, um die industrielle Aufgabe auszuführen, wobei die Analysevorrichtung (10) Folgendes enthält:
eine Empfangseinheit (11), die eingerichtet ist, Sensordaten (SD) zu empfangen, wobei die Sensordaten (SD) ein Ereignis darstellen, das einen Betriebszustand einer oder mehrerer der industriellen Vorrichtungen (2 - 5) charakterisiert;
eine Priorisierungseinheit (12), die eingerichtet ist, eine Priorität (P) der Sensordaten (SD) auf der Grundlage einer vorgespeicherten Industrievorrichtungs-Prioritätsinformation zu bestimmen, die der einen oder den mehreren Industrievorrichtungen (2 - 5) zugeordnet ist, die durch die Sensordaten (SD) gekennzeichnet sind; und
eine Labelerzeugungseinheit (13), die eingerichtet ist, das durch die Sensordaten (SD) dargestellte Ereignis unter Verwendung eines Klassifizierungsalgorithmus autonom in eine von mehreren vordefinierten Ereigniskategorien (C) zu klassifizieren und autonom ein Label (L) für die Sensordaten (SD) zu erzeugen, wobei das Label (L) die von der Priorisierungseinheit (12) bestimmte Priorität (P) der Sensordaten (SD) und die Ereigniskategorie (C) enthält, in die die Labelerzeugungseinheit (13) die Sensordaten (SD) klassifiziert hat;
wobei die Priorisierungseinheit (12) eingerichtet ist, die Priorität (P) der Sensordaten (SD) ferner zu bestimmen auf der Grundlage von:
einer vorgespeicherten Häufigkeit des Auftretens des durch die Sensordaten (SD) dargestellten Ereignisses,
einer vorgespeicherten Häufigkeit des Auftretens der Ereigniskategorie (C), in die die Labelerzeugungseinheit (13) das durch die Sensordaten (SD) dargestellte Ereignis klassifiziert hat, und/oder
eine vorgespeicherte Verlustfunktion, die eine Auswirkung früherer Ereignisse derselben Ereigniskategorie (C) wie das durch die Sensordaten (SD) dargestellte Ereignis auf das industrielle System (1) und/oder auf mindestens eines der industriellen Geräte (2 - 5) anzeigt; und
wobei die Analysevorrichtung (10) eine Anomalieerkennungseinheit enthält, die eingerichtet ist, eine Anomalie im Betriebszustand des industriellen Systems (1) und/oder der industriellen Geräte (2 - 5) auf der Grundlage des Labels (L) unter Verwendung eines Anomaliealgorithmus zu erkennen.

2. Analysevorrichtung nach Anspruch 1,
wobei jeder Ereigniskategorie (C) der mehreren vordefinierten Ereigniskategorien (C) eine vorgespeicherte Ereignisprioritätsinformation zugeordnet ist; und
die Priorisierungseinheit (12) eingerichtet ist, die Priorität (P) der Sensordaten (SD) ferner auf der Grundlage der vorgespeicherten Ereignisprioritätsinformation zu bestimmen, die der Ereigniskategorie (C) zugeordnet ist, in die die Labelerzeugungseinheit (13) das durch die Sensordaten (SD) dargestellte Ereignis klassifiziert hat.

3. Analysevorrichtung nach Anspruch 1 oder 2, die ferner eine Warneinheit umfasst, die eingerichtet ist, eine Warninformation zu senden, wenn die ermittelte Ereigniskategorie (C), in die die Kennzeichnungseinheit (13) das durch die Sensordaten (SD) dargestellte Ereignis eingestuft hat, zu einer vordefinierten sicherheitsrelevanten Ereigniskategorie (C) gehört und/oder wenn die ermittelte Priorität (P) eine vordefinierte hohe Priorität ist.

4. Analysevorrichtung nach einem der Ansprüche 1 bis 3, wobei die Labelerzeugungseinheit (13) eingerichtet ist, nur dann selbstständig ein Label (L) für die Sensordaten (SD) zu erzeugen, wenn die Labelerzeugungseinheit (13) das durch die Sensordaten (SD) dargestellte Ereignis in eine der vordefinierten relevanten Ereigniskategorien (C) einordnet.

5. Analysevorrichtung nach einem der Ansprüche 1 bis 4, wobei der Klassifizierungsalgorithmus eine logistische Regression, den Algorithmus der k-nearest neighbors, Entscheidungsbäume, eine Support Vector Machine, Naive Bayes, neuronale Netzwerke und/oder tiefe neuronale Netzwerke (engl: Deep Neural Networks) umfasst.

6. Analysevorrichtung nach einem der Ansprüche 1 bis 5, ferner umfassend:
eine Speicherbestimmungseinheit (14), eingerichtet, um basierend auf der bestimmten Ereigniskategorie (C) und/oder basierend auf der bestimmten Priorität (P) zu bestimmen, welche Teile der Sensordaten (SD) zu speichern sind;
eine Speichereinheit (15), die eingerichtet ist, das Label (L) der Sensordaten (SD) zusammen mit den von der Speicherbestimmungseinheit (14) bestimmten Teilen der Sensordaten (SD) zu speichern.

7. Analysevorrichtung nach Anspruch 3 und 6,
wobei die Speichereinheit (15) eingerichtet ist, das Speichern von Labels (L) und Sensordaten (SD), die sich auf Sensordaten (SD) beziehen, mit einer höheren Priorität gegenüber dem Speichern von Labels (L) und Sensordaten (SD), die sich auf Sensordaten (SD) beziehen, mit einer niedrigeren Priorität zu priorisieren; und/oder
die Warneinheit so eingerichtet ist, dass sie das Senden einer Warninformation für Sensordaten (SD) mit einer höheren Priorität gegenüber dem Senden einer Warninformation für Sensordaten (SD), die sich auf Sensordaten (SD) mit einer niedrigeren Priorität beziehen, priorisiert.

8. Analysevorrichtung nach Anspruch 6 oder 7, wobei die Speicherbestimmungseinheit (14) eingerichtet ist, mittels Texterkennungstechniken Schlüsselwörter aus den Sensordaten (SD) zu ermitteln und diese in das Label und/oder in die zu speichernden Teile der Sensordaten (SD) aufzunehmen.

9. Analysevorrichtung nach einem der Ansprüche 6 bis 8, wobei die Anomalieerkennungseinheit ferner eingerichtet ist, eine Anomalie im Betriebszustand des industriellen Systems (1) und/oder der industriellen Geräte (2 - 5) basierend auf dem Label (L) und Teilen der in der Speichereinheit (15) gespeicherten Sensordaten (SD) unter Verwendung eines Anomaliealgorithmus zu erkennen.

10. Analysevorrichtung nach Anspruch 1 oder 9, wobei der Anomaliealgorithmus einen vortrainierten maschinellen Lernalgorithmus, insbesondere einen der folgenden Algorithmen, umfasst: lokaler Ausreißerfaktor (engl.: local outlier factor), Isolationswald (engl.: isolation forest) und/oder Vektormaschine.

11. Die Analysevorrichtung nach einem der Ansprüche 6 bis 10, die ferner Folgendes umfasst:
eine statistische Einheit, die eingerichtet ist, allgemeine Statistiken über die in der Speichereinheit (15) gespeicherten Daten zu liefern, insbesondere einschließlich einer Häufigkeit, mit der Daten in der Speichereinheit (15) gespeichert werden, einer Menge an genutztem und/oder verfügbarem Speicherplatz in der Speichereinheit (15), einer Dauer der Nichtnutzung von in der Speichereinheit (15) gespeicherten Daten.

12. Analysevorrichtung nach einem der Ansprüche 6 bis 11, ferner umfassend:
eine Wartungsvorhersageeinheit, die eingerichtet ist, auf der Grundlage der in der Speichereinheit (15) gespeicherten Label (L) und/oder Teile der Sensordaten (SD) einen Zeitpunkt für die Durchführung einer Wartung des Industriesystems (1) und/oder von Industriegeräten (2 - 5) zu empfehlen.

13. Verfahren zur Überwachung eines Betriebszustands eines industriellen Systems (1), das eine industrielle Aufgabe ausführt, insbesondere unter Verwendung der Analysevorrichtung (10) nach einem der Ansprüche 1 bis 12, wobei das industrielle System (1) mehrere industrielle Geräte (2 - 5) umfasst, die zusammenwirken, um die industrielle Aufgabe auszuführen, wobei das Verfahren umfasst:
Empfangen (S1) von Sensordaten (SD), wobei die Sensordaten (SD) ein Ereignis darstellen, das einen Betriebszustand eines oder mehrerer der industriellen Geräte (2 - 5) charakterisiert;
Bestimmen (S2) einer Priorität (P) der Sensordaten (SD) auf der Grundlage einer vorgespeicherten Industrievorrichtungs-Prioritätsinformation, die der einen oder den mehreren Industrievorrichtungen (2 - 5) zugeordnet ist, die durch die Sensordaten (SD) gekennzeichnet sind;
autonomes Klassifizieren (S3) des durch die Sensordaten (SD) dargestellten Ereignisses in eine von mehreren vordefinierten Ereigniskategorien (C) unter Verwendung eines Klassifikationsalgorithmus; und
autonomes Erzeugen (S4) eines Labels (L) für die Sensordaten (SD), wobei das Label (L) die Priorität (P) der Sensordaten (SD), die von der Priorisierungseinheit (12) bestimmt wurde, und die Ereigniskategorie (C), in die die Sensordaten (SD) klassifiziert wurden, enthält;
wobei der Schritt des Bestimmens (S2) der Priorität (P) der Sensordaten (SD) ferner die Bestimmung der Priorität (P) auf der Grundlage von:
einer vorgespeicherten Häufigkeit des Auftretens des durch die Sensordaten (SD) repräsentierten Ereignisses,
eine vorgespeicherte Häufigkeit des Auftretens der Ereigniskategorie (C), in die die Labelerzeugungseinheit (13) das durch die Sensordaten (SD) dargestellte Ereignis klassifiziert hat, und/oder
eine vorgespeicherte Verlustfunktion, die eine Auswirkung früherer Ereignisse derselben Ereigniskategorie (C) wie das durch die Sensordaten (SD) dargestellte Ereignis auf das industrielle System (1) und/oder auf mindestens eines der industriellen Geräte (2 - 5) anzeigt;
wobei das Verfahren ferner das Erkennen einer Anomalie im Betriebszustand des industriellen Systems (1) und/oder der industriellen Geräte (2 - 5) auf der Grundlage des Labels (L) unter Verwendung eines AnomalieAlgorithmus umfasst.

14. Computerprogrammprodukt, umfassend einen Programmcode zum Ausführen des Verfahrens nach Anspruch 13, wenn es auf mindestens einem Computer ausgeführt wird.

## Revendications

1. Dispositif d'analyse (10) pour surveiller un état opérationnel d'un système industriel (1) effectuant une tâche industrielle, le système industriel (1) comprenant de multiples dispositifs industriels (2 - 5) interagissant pour effectuer la tâche industrielle, le dispositif d'analyse (10) comprenant :
une unité de réception (11) configurée pour recevoir des données de capteur (SD), les données de capteur (SD) représentant un événement caractérisant un état opérationnel d'un ou plusieurs des dispositifs industriels (2 - 5) ;
une unité de priorisation (12) configurée pour déterminer une priorité (P) des données de capteur (SD) sur la base d'une information de priorité de dispositif industriel préenregistrée associée à un ou plusieurs dispositifs industriels (2 - 5) **caractérisés par** les données de capteur (SD) ; et
une unité d'étiquetage (13) configurée pour classer de manière autonome l'événement représenté par les données du capteur (SD) dans l'une des multiples catégories d'événements prédéfinies (C) à l'aide d'un algorithme de classification et pour créer de manière autonome une étiquette (L) pour les données du capteur (SD), l'étiquette (L) comprenant la priorité (P) des données du capteur (SD) déterminée par l'unité de hiérarchisation (12) et la catégorie d'événements (C) dans laquelle l'unité d'étiquetage (13) a classé les données du capteur (SD) ;
L'unité de hiérarchisation (12) est configurée pour déterminer la priorité (P) des données de capteur (SD) en fonction de :
une fréquence d'occurrence prédéterminée de l'événement représenté par les données du capteur (SD),
une fréquence d'occurrence prédéterminée de la catégorie d'événement (C) dans laquelle l'unité d'étiquetage (13) a classé l'événement représenté par les données du capteur (SD), et/ou
une fonction de perte prédéfinie indiquant l'impact des événements précédents de la même catégorie d'événement (C) que l'événement représenté par les données du capteur (SD) sur le système industriel (1) et/ou sur au moins un des dispositifs industriels (2 - 5) ; et
dans lequel le dispositif d'analyse (10) comprend une unité de détection d'anomalie configurée pour détecter une anomalie dans l'état opérationnel du système industriel (1) et/ou des dispositifs industriels (2 - 5) sur la base de l'étiquette (L) à l'aide d'un algorithme d'anomalie.

2. Dispositif d'analyse selon la revendication 1, dans lequel
chaque catégorie d'événement (C) des multiples catégories d'événement prédéfinies (C) est associée à une information de priorité d'événement préenregistrée ; et
l'unité de hiérarchisation (12) est configurée pour déterminer la priorité (P) des données de capteur (SD) en fonction des informations de priorité d'événement prédéfinies associées à la catégorie d'événement (C) dans laquelle l'unité d'étiquetage (13) a classé l'événement représenté par les données de capteur (SD).

3. Dispositif d'analyse selon la revendication 1 ou 2, comprenant en outre une unité d'avertissement configurée pour envoyer une information d'avertissement si la catégorie d'événement déterminée (C) dans laquelle l'unité d'étiquetage (13) a classé l'événement représenté par les données du capteur (SD) appartient à une catégorie d'événement prédéfinie relative à la sécurité (C) et/ou si la priorité déterminée (P) est une priorité élevée prédéfinie.

4. Dispositif d'analyse selon l'une des revendications 1 à 3, dans lequel l'unité d'étiquetage (13) est configurée pour créer de manière autonome une étiquette (L) pour les données du capteur (SD) uniquement si l'unité d'étiquetage (13) classe l'événement représenté par les données du capteur (SD) dans l'une des catégories d'événements pertinents prédéfinies (C).

5. Dispositif d'analyse selon l'une des revendications 1 à 4, dans lequel l'algorithme de classification comprend une régression logistique, des voisins les plus proches, des arbres de décision, une machine à vecteur de support, Naive Bayes, des réseaux neuronaux et/ou des réseaux neuronaux profonds.

6. Dispositif d'analyse selon l'une des revendications 1 à 5, comprenant en outre :
une unité de détermination du stockage (14) configurée pour déterminer quelles parties des données de capteur (SD) doivent être stockées en fonction de la catégorie d'événement déterminée (C) et/ou de la priorité déterminée (P) ;
une unité de stockage (15) configurée pour stocker l'étiquette (L) des données du capteur (SD) avec les parties des données du capteur (SD) déterminées par l'unité de détermination du stockage (14).

7. Dispositif d'analyse selon les revendications 3 et 6, dans lequel
l'unité de stockage (15) est configurée pour donner la priorité au stockage des étiquettes (L) et des données de capteur (SD) relatives aux données de capteur (SD) avec une priorité plus élevée qu'au stockage des étiquettes (L) et des données de capteur (SD) relatives aux données de capteur (SD) avec une priorité plus faible ; et/ou
l'unité d'avertissement est configurée pour donner la priorité à l'envoi d'une information d'avertissement pour les données de capteur (SD) avec une priorité plus élevée qu'à l'envoi d'une information d'avertissement pour les données de capteur (SD) relatives aux données de capteur (SD) avec une priorité plus faible.

8. Dispositif d'analyse selon la revendication 6 ou 7, dans lequel l'unité de détermination du stockage (14) est configurée pour utiliser des techniques de reconnaissance de texte afin d'extraire des mots clés des données du capteur (SD) et de les inclure dans l'étiquette et/ou dans les parties des données du capteur (SD) à stocker.

9. Dispositif d'analyse selon l'une des revendications 6 à 8, dans lequel l'unité de détection des anomalies est en outre configurée pour détecter une anomalie dans l'état de fonctionnement du système industriel (1) et/ou des dispositifs industriels (2 à 5) sur la base de l'étiquette (L) et des parties des données de capteur (SD) stockées dans l'unité de stockage (15) à l'aide d'un algorithme d'anomalie.

10. Dispositif d'analyse selon la revendication 1 ou 9, dans lequel l'algorithme d'anomalie comprend un algorithme d'apprentissage automatique pré-entraîné, en particulier l'un des algorithmes suivants : facteur de valeurs aberrantes locales, forêt d'isolation, et/ou machine vectorielle.

11. Dispositif d'analyse selon l'une des revendications 6 à 10, comprenant en outre
une unité statistique configurée pour fournir des statistiques générales sur les données stockées dans l'unité de stockage (15), comprenant notamment une fréquence de stockage des données dans l'unité de stockage (15), une quantité d'espace de stockage utilisé et/ou disponible dans l'unité de stockage (15), une durée de non-utilisation des données stockées dans l'unité de stockage (15).

12. Dispositif d'analyse selon l'une des revendications 6 à 11, comprenant en outre :
une unité de prédiction de maintenance configurée pour recommander un moment pour effectuer la maintenance du système industriel (1) et/ou des dispositifs industriels (2 - 5) sur la base des étiquettes (L) et/ou des parties des données de capteur (SD) stockées dans l'unité de stockage (15).

13. Procédé de surveillance d'un état opérationnel d'un système industriel (1) effectuant une tâche industrielle, en particulier à l'aide du dispositif d'analyse (10) selon l'une quelconque des revendications 1 à 12, le système industriel (1) comprenant de multiples dispositifs industriels (2 - 5) interagissant pour effectuer la tâche industrielle, le procédé comprenant :
la réception (S1) de données capteurs (SD), les données capteurs (SD) représentant un événement caractérisant un état opérationnel d'un ou plusieurs des dispositifs industriels (2 - 5) ;
déterminer (S2) une priorité (P) des données de capteur (SD) sur la base d'une information de priorité de dispositif industriel préenregistrée associée à un ou plusieurs dispositifs industriels (2 - 5) **caractérisés par** les données de capteur (SD) ;
classer de manière autonome (S3) l'événement représenté par les données du capteur (SD) dans l'une des multiples catégories d'événements prédéfinies (C) à l'aide d'un algorithme de classification ; et
créer de manière autonome (S4) une étiquette (L) pour les données du capteur (SD), l'étiquette (L) comprenant la priorité (P) des données du capteur (SD) déterminée par l'unité de hiérarchisation (12) et la catégorie d'événement (C) dans laquelle les données du capteur (SD) ont été classées ;
dans lequel l'étape de détermination (S2) de la priorité (P) des données de capteur (SD) fonde en outre la détermination de la priorité (P) sur :
une fréquence d'occurrence prédéterminée de l'événement représenté par les données du capteur (SD),
une fréquence d'occurrence prédéterminée de la catégorie d'événement (C) dans laquelle l'unité d'étiquetage (13) a classé l'événement représenté par les données du capteur (SD), et/ou
une fonction de perte prédéfinie indiquant l'impact des événements précédents de la même catégorie d'événement (C) que l'événement représenté par les données du capteur (SD) sur le système industriel (1) et/ou sur au moins un des dispositifs industriels (2 - 5) ;
La méthode consiste en outre à détecter une anomalie dans l'état de fonctionnement du système industriel (1) et/ou des dispositifs industriels (2 - 5) sur la base de l'étiquette (L) à l'aide d'un algorithme d'anomalie.

14. Produit de programme informatique comprenant un code de programme pour l'exécution de la méthode selon la revendication 13 lorsqu'elle est exécutée sur au moins un ordinateur.
